# EUROPEAN PATENT SPECIFICATION

(11) **EP 2 362 212 B1**
(45) Date of publication and mention of the grant of the patent: **20.02.2019**
(21) Application number: 10157925.8
(22) Date of filing: 26.03.2010
(51) Int. Cl.: G01N 27/447

(54) **PDMA and derivatized cellulose as separation medium for DNA**
PDMA und derivatisierte Zellulose als DNA-Trennmittel
PDMA et cellulose dérivatisée en tant que support de séparation pour ADN

(30) Priority: 18.03.2009 EP 09100192
(43) Date of publication of application: 31.08.2011
(73) Proprietor: Agilent Technologies, Inc., Santa Clara, California 95051 (US)
(72) Inventor: Gassmann, Marcus, 76227 Karlsruhe (DE)
(74) Representative: Grünecker Patent- und Rechtsanwälte PartG mbB

(56) References cited:
- EP-A1- 1 376 126
- WO-A2-02/056003
- US-A1- 2002 029 968
- SHUHUA PENG ET AL: "Hydroxyethylcellulose- graft -poly ( N,N -dimethylacrylamide) copolymer as a multifunctional separation medium for CE", ELECTROPHORESIS, vol. 29, no. 21, 1 November 2008 (2008-11-01), pages 4351-4354, XP55019656, ISSN: 0173-0835, DOI: 10.1002/elps.200800149
- SJÖDAHL: "Separation of oligonucleotides in N-methyl-formamide-based polymer matrices by capillary electrophoresis", JOURNAL OF SEPARATION SCIENCE, vol. 30, no. 1, 1 January 2007 (2007-01-01), pages 104-109, XP55019657, ISSN: 1615-9306
- ZHANG J ET AL: "Designing polymer matrix for microchip-based double-stranded DNA capillary electrophoresis", JOURNAL OF CHROMATOGRAPHY, ELSEVIER SCIENCE PUBLISHERS B.V, NL, vol. 1117, no. 2, 9 June 2006 (2006-06-09) , pages 219-227, XP024967345, ISSN: 0021-9673, DOI: 10.1016/J.CHROMA.2006.03.106 [retrieved on 2006-06-09]

## Description

### BACKGROUND ART

The present invention relates to separation of a sample, particularly to separation of nucleic acids.

Electrophoresis is a method to analyze complex mixtures of substances, for instance biological substances like proteins, DNA or RNA. By electrophoresis, a mixture of different substances may be separated by taking into account the intrinsic charge/mass ratio of these substances. For an electrophoretic analysis, an analyt may be loaded on a poured agarose gel, and then an electric field is applied along the gel so that the electrically charged molecules are separated based on their different electric charges. The agarose provides a sieving matrix that slows down the movement of the analytes. The larger components of the analyte mixture migrate slower compared to the smaller components. Therefore a separation based on the size of the components is achieved.

Capillary electrophoresis is based on the above described principle of electrophoresis and provides very small capillaries, for instance as conduits formed in a surface of a glass chip, which may be filled with fluid separating material in a gel-like phase.

For a powerful electrophoresis separation analysis, a powerful separation medium is required.

Conventional systems are disclosed in EP 0,734,521, US 5,567,292, US 5,916,426, US 6,355,709, US 6,358,385, US 7,045,048, JP 3122846, AU 677495, CA 2,179,013, DE 69432267, US 5,948,227, US 6,042,710, US 6,440,284, US 7,081,190, CA 2,309,831, AU 747232, and JP 4144776.

US 5,534,123 and US 5,728,282 each disclose a capillary electrophoresis separation matrix for single-stranded nucleic acids, along with methods for using and preparing the matrix. The separation matrix provides denaturing conditions and contains hydroxyethyl cellulose (HEC) in combination with urea, and preferably also includes formamide. The separation matrix may be used for DNA sizing and sequencing applications and provides a single-base resolution to approximately 500 base pairs.

US 6,770,698 discloses a polymer solution for the efficient separation of charged macromolecules by electrophoresis that includes a plurality of polymers. These polymers are entangled to form an interpenetrating network with greater entanglement times than corresponding homopolymers of the same length. These polymers are different and do not phase separate when dissolved in solution. Preferred polymers are PAM and PVP or PDAM and PVP. The polymer solutions provide at least a 500-base read length in one run for a single-stranded DNA separation.

US 5,948,227 discloses methods of electrophoretically separating macromolecular components, as well as compositions and systems useful in carrying out such methods. Specifically, the methods comprise providing a substrate that has at least a first capillary channel disposed therein. The surface of the channel has a first surface charge associated therewith, and is filled with a water soluble surface adsorbing polymer solution that bears a net charge that is the same as the charge on the capillary surface.

US 5,552,028 discloses uncharged water-soluble silica-adsorbing polymers for suppressing electroendoosmotic flow and to reduce analyte-wall interactions in capillary electrophoresis. In one aspect, one or more of such polymers are employed as components of a separation medium for the separation of biomolecules, such as polynucleotides, polysaccharides, proteins, and the like, by capillary electrophoresis. Generally, such polymers are characterized by (i) water solubility over the temperature range between about 20 °C to about 50 °C, (ii) concentration in a separation medium in the range between about 0.001% to about 10% (weight/volume), (iii) molecular weight in the range of about 5x10³ to about 1x10⁶ daltons, and (iv) absence of charged groups in an aqueous medium having pH in the range of about 6 to about 9. In one embodiment, polymers are selected from the group consisting of polylactams, such as polyvinylpyrrolidone; N,N-disubstituted polyacrylamides; and N-substituted polyacrylamides. In accordance with the method, a sufficient amount of polymer adsorbs to the capillary surface to establish a zone of high viscosity that shields the analyte from the wall and impedes the movement of an electrical double layer under an electric field.

S. Boulos, O. Cabrices, M. Bias, B.R. McCord, "Development of an entangled polymer solution for improved resolution in DNA typing by CE", Electrophoresis, December 2008, 29(23), pp. 4695 to 4703 discloses a sieving matrix consisting of a mixture of two commercial polymers with different chemical structures, PVP (Mw=1,000,000 g/mol) and hydroxyethyl cellulose (HEC, Mw=250,000 g/mol) used for single-stranded DNA separation. This sieving matrix was optimized with a Doehlert design, a second-order model statistical design. A total concentration of 3.5% of polymer, which contains 20.4% of PVP relative to HEC, combines the proper coating capability of the PVP with the high efficiency of the HEC. The use of this new sieving matrix gives highly resolved and reproducible separations of single-stranded DNA ranging from 50 to 500 bp. The separation of these DNA fragments is accomplished in less than 30 min under 319 V/cm with efficiencies up to 4 million plates per meter (measured at 350 bp). More than 90 successive analyses were achieved without any deterioration of the separation performance. Repeatability values of resolution (given as %RSD) for the analyzed DNA fragments are 2.2% (measured with the couple 139/150 bp) and 5.3% (measured with the couple 490/500 bp). Moreover, this mixture has a low viscosity (388 cP), which permits easy filling offused-silica capillaries. This new sieving matrix, which exhibits high sieving performance, good dynamic coating ability, and low viscosity, can be a useful alternative to other less easily synthesized sieving matrices and eliminates the need for precoating the capillary to eliminate electroosmosis.

Shuhua Peng et al. in Electrophoresis 2008, 29 (21), 4351, XP055019656, discloses a separation medium comprising both PDMA and a cellulose derivative (HEC).

However, it may still be difficult to provide a separation medium which has a proper performance and is cheap in manufacture.

### DISCLOSURE

It is an object of the invention to provide a separation medium which has a proper performance and is cheap in manufacture. The object is solved by the independent claims. Exemplary embodiments are shown by the dependent claims.

According to the present invention, a separation medium for separating different components of a fluidic sample is provided, the separation medium comprising or consisting of polydimethylacrylamide (PDMA) molecules having a molecular weight of less than 500 kDa and a derivatized cellulose product having a molecular weight of less than 100 kDa.

According to an aspect of the present invention, a separation apparatus for separating different components of a fluidic sample is provided, the separation apparatus comprising a substrate, at least one fluid conduit formed in and/or on the substrate and adapted for conducting the fluidic sample, and a separation medium having the above-mentioned features provided in at least a part of the at least one fluid conduit.

Further according to the present invention, a method of manufacturing a separation medium for separating different components of a fluidic sample is provided, the method comprising mixing polydimethylacrylamide molecules having a molecular weight of less than 500 kDa and a derivatized cellulose product having a molecular weight of less than 100 kDa.

The term "separation medium" may particularly denote any substance which can be used as a transport medium for a sample to be separated into different fractions, particularly for biological and biochemical applications involving a separation of different fluidic components of a fluidic sample. More particularly, such a separation medium may be used as a material for filling channels for capillary electrophoresis. The separation medium can have a gel-like, liquid or solid consistency.

The term "cellulose" may be denoted as an organic component with the formula (C₆H₁₂O₆)ₙ, n being an integer number, and may denote a polysaccharide formed by a (for instance linear) chain of a plurality of (for instance several hundred to over 10.000) linked glucose units.

The term "derivatization" may be denoted as a technique used in chemistry which transforms a chemical compound into a product of similar chemical structure, called derivative. Generally, a specific functional group of the compound participates in the derivatization reaction and transforms the educt to a derivate of deviating reactivity or chemical composition.

The term "derivatized cellulose" may particularly denote a product in which hydroxyl groups of a cellulose product are partially or fully reacted with various reagents to afford derivatives. Cellulose esters and cellulose ethers are examples for such materials. More particularly, ether derivatives include ethyl cellulose, methyl cellulose, hydroxypropyl cellulose, carboxymethyl cellulose, hydroxypropylmethyl cellulose, hydroxyethylmethyl cellulose, etc.

The term "electrically charged" may particularly denote that the PDMA component comprises a (for instance weak) net charge which is not compensated entirely by oppositely charged sections of the PDMA. The term "electrically charged" may cover both a positive charge or a negative charge. For instance, side chains of the PDMA may comprise polar groups resulting in an uncompensated net charge of the entire PDMA particles.

According to an exemplary embodiment, a mixture of PDMA (which may be electrically neutral or electrically charged) and a derivatized cellulose product (which may be electrically neutral or electrically charged) is provided which is highly appropriate as a separation medium for life science applications. Such a substance makes use of proper coating properties of PDMA on a surface of a capillary channel in combination with superior separation properties of PDMA. This material may be mixed with a derivatized cellulose product which results in excellent separation properties. A derivatized cellulose product when taken alone (i.e. without PDMA) would suffer from poor coating properties. Hence, only the combination of these materials results in a proper coating of a capillary and a high separation efficiency. At the same time, the constituents of the separation medium are cheap, simple to handle, biocompatible and stable.

Without wishing to be bound to a specific theory, it is presently believed that PDMA with a relatively small molecular weight of less than about 500 kDa can be efficiently mixed with derivatized cellulose in a simple manner. Due to such a small size of the used PDMA molecules (in contrast to this, conventionally, often PDMA molecules are used with a molecular weight of 1000 kDa or more), it is possible that such relatively low-molecular particles are simply dissolved in an aqueous solution and are optionally shaken for promoting dissolving and soaking. Powderous derivatized cellulose (or derivatized cellulose in another dry form) may then be simply poured into the PDMA solution. This simple procedure may result automatically in the formation of a powerful separation medium. Alternatively, it is also possible to dissolve derivatized cellulose in an aqueous solution and to pour powderous PDMA (or PDMA in another dry form) into the solution. It is presently assumed that the automatic formation of the separation medium results from the relatively short length of the PDMA polymer chains which seem to properly indent or interlock with the derivatized cellulose. According to an embodiment, such a result may thus be achieved without the need to execute a complex and time-consuming conventional procedure in which an interpenetration network is prepared by synthesizing a first polymer in a matrix of a second polymer. Moreover, due to the use of such small PDMA molecular chains (particularly in combination with sufficiently small HEC molecular chains), the viscosity of the obtained separation medium may be reduced so as to obtain a separation medium which is simple in handling.Next, further exemplary embodiments of the separation medium will be mentioned. However, these embodiments also apply to the separation apparatus and to the method.

In an embodiment, the polydimethylacrylamide may have a molecular weight of less than 300 kDa, particularly of less than or equal 100 kDa. With these even smaller PDMA molecules, the interaction with the derivatized cellulose product may be further intensified.

According to the invention, the derivatized cellulose product has a molecular weight of less than 100 kDa. For instance, such a derivatized cellulose product may comprises hydroxymethyl cellulose (HEC). More particularly, HEC may be used with a molecular weight (or molecular mass) of between 70 kDa and 90 kDa. Such a relatively short chained derivatized cellulose product in combination with a relatively short chained PDMA may result in a synergetic cooperation between these two components which may consequently form a stable separation medium without the need to perform a complex embedding of one of the polymers in a matrix of the other one.

It has turned out to be particularly advantageous to combine a derivatized cellulose product with electrically charged PDMA, i.e. a PDMA component which is not completely electrically neutral. It may happen that a wall of a fluidic conduit carries a net charge which can then be at least partially compensated by a for instance oppositely charged PDMA. Thus, particularly the combination of an intentionally uncompensated charge of PDMA with a cellulose derivative, when being provided in a solution (such as an aqueous solution), may result in a molecular network allowing for an efficient separation of particles of a fluidic samples. Without wishing to be bound to a specific theory, it is presently believed that PDMA with a slight net charge efficiently supports the dynamic coating properties of the PDMA. Hence, a net charge of the PDMA may be aligned close to a surface of the capillary without generating any undesired electroosmotic flow. Thus, electrically charging PDMA may make it dispensible to coat the capillary before filling the fluid separation material in the channel which is time-consuming and difficult. Consequently, the mixture of polar PDMA with derivatized cellulose has turned out to work very well even without an additional coating of the capillary.

The polydimethylacrylamide (PDMA) may have attached a polar group providing an electric net charge (which may be a positive charge or a negative charge). Such a polar group may be a chemical group like acrylic acid and/or methacrylic acid having an electric charge and being attached or bound to the PDMA. A polar group may be any chemical grouping in which the distribution of charge carriers such as electrons is uneven enabling it to take part in electrostatic interactions. Thus, the net charge may result from an entity different from the PDMA.

It is possible that the net charge is quite small. For instance, a ratio between attached groups and PDMA may be less than 5 per mill (i.e. per thousand), for instance 1 per mill.

According to an exemplary embodiment, the PDMA may comprise a negatively charged side chain for contributing the electric charge. A slight negative charge has turned out to be particularly efficient for further enhancing the chemical and physical properties of the fluid separation material filling a capillary. Such a slight negative charge may be realized by the addition of a small amount of acryl acid (for instance 1‰) having negatively charged side chains which result in a slight negative net charge of the modified PDMA. It has turned out that the coating properties of the substance can be further improved significantly by such a slight negative charge.

In an embodiment, the separation medium may be used for separating different components of a fluidic sample by gel electrophoresis. Gel electrophoresis may be denoted as a technique used for the separation of samples such as deoxyribonucleic acid (DNA), ribonucleic acid (RNA), or protein molecules using an electric current or voltage applied to a gel-like fluid separation matrix. Such a gel electrophoresis procedure may be performed for analytical purposes, but may also be used as a purification or preparation technique prior to other methods such as mass spectroscopy, polymerase chain reaction (PCR), cloning, DNA sequencing, etc.

Particularly, the fluid separation substance may also be used for capillary electrophoresis (CE) applications. Capillary electrophoresis can be used to separate ionic species by their charge and frictional forces. In capillary electrophoresis, such species may be separated based on their size to charge ratio and the interior of a small capillary field within an electrolyte.

The separation medium may be adapted as a matrix for separating single-stranded deoxyribonucleic acid (DNA) by gel electrophoresis.

According to an exemplary embodiment, the derivatized cellulose product may comprise a hydroxyalkyl cellulose. Hydroxyalkyl cellulose as a water-soluble neutral polymer may be a proper choice for mixing with PDMA for the purpose of providing a separation medium for electrophoresis purposes.

More particularly, the hydroxyalkyl cellulose may comprise hydroxymethyl cellulose (HMC), hydroxyethyl cellulose (HEC) or hydroxypropyl cellulose (HPC). It may be preferred to use HEC which is a non-ionic water-soluble polymer having superior fluid separation properties particularly in combination with PDMA. It is readily soluble in hot or cold water and can be used to prepare solutions with a wide range of viscosities. For fluid separation purposes, particularly a sufficiently small viscosity is advantageous since this allows to fill in the fluid separating material in a capillary in a simple way. Such a small viscosity may also allow to remove the fluid separating material from a capillary after use for recycling the fluid separating material and/or the substrate. HEC has further outstanding tolerance for dissolved electrolytes.

The separation medium may further comprise a solvent (particularly an aqueous solvent, more particularly water, wherein organic solvents may be possible as well) in which both the PDMA and the derivatized cellulose product are dissolved. Here, both PDMA and HEC has superior solution properties resulting in a separation medium which forms a network in a separation channel allowing for DNA separation or the like.

To obtain a proper separation medium, PDMA in a range between about 1 weight percent and about 10 weight percent, particularly between about 2 weight percent and about 5 weight percent, may be mixed with a derivatized cellulose product such as HEC in a concentration range between about 1 weight percent and about 16 weight percent, particularly between about 2 weight percent and about 8 weight percent. This mixture may be dissolved in a solvent (so that the above numbers of weight percent may be related to the entire solution). It has turned out that particularly a mixture ratio of 2 to 5 weight percent HEC and 2 to 8 percent PDMA in the ready-made solution results in very good separation properties without the necessity of coating of the capillary. Simultaneously, such a composition may ensure that critical viscosity values are not exceeded. These concentrations have turned out to result in a separation material having proper coating properties, a proper fluid separation capacity and additionally a sufficiently small viscosity which promotes a fast and efficient separation.

Thus, PDMA may be dissolved in a liquid phase or liquid solution, wherein HEC or another derivatized cellulose product may then be dissolved in such a PDMA solution. In other words, a diluted PDMA solution may be treated by adding powderous HEC.

In an embodiment, carbamide may be added to the separation medium. Carbamide or urea may be denoted as an organic component with a chemical formula (NH₂)₂CO. Particularly, such a carbamide added to the separation medium may be selected from a concentration in a range between about 2 M and about 10 M, particularly between about 5 M and about 8 M (in the ready-made solution). Carbamide may have a denaturing effect, i.e. may promote the separation of a double-helical DNA into single strands (denaturation of other molecules to be separated is possible as well). Therefore, such a denaturation ensuring a proper performance of the separation procedure may be performed within the separation medium.

In an embodiment, pyrrolidinone (C₅H₉NO) may be added to the separation medium. Such an additive may further promote the denaturing of biological molecules such as DNA, particularly when being provided in addition to urea. It has further turned out that, surprisingly, such a pyrrolidinone contribution further improves the resolution of a separation procedure. A proper concentration range for pyrrolidinone is between about 2 weight percent and about 20 weight percent (in the ready-made solution, for instance an aqueous solution). For instance, pyrrolidinone may be provided with 15 weight percent.

In the following, further exemplary embodiments of the method will be explained. However, these embodiments also apply to the separation medium and to the separation apparatus.

In the method, the PDMA may be dissolved in a liquid such as an aqueous solution. A PDMA polymer may be obtained by polymerizing an acrylamide such as an N,N-dimetylacrylamide monomer.

The derivatized cellulose product may then be added in powder form to the dissolved PDMA. Particularly HEC may be added to the dissolved PDMA in aqueous solution. The derivatized cellulose product may be purified to remove impurities from the HEC which might otherwise deteriorate the fluid separation procedure.

Particularly, the purification of the derivatized cellulose product such as HEC may be performed by an adding an ion exchanger for removing ionic impurities from the derivatized cellulose product. Ion exchange may be denoted as an exchange of ions between two fractions such as two electrolytes or between an electrolyte solution and a complex. This may result in a purification, separation and decontamination of aqueous and other ion containing solutions with for instance polymeric ion exchangers. Mineralic ion exchangers may be used as well. Ion exchangers can be cation exchangers that exchange positively charged ions (cations) or anion exchangers that exchange negatively charged ions (anions).

In an embodiment, it is possible to treat the separation medium for reducing viscosity of the separation medium. A sufficiently small viscosity has advantageous effects on the fluid separation properties of the separation medium. For instance, the reduction of the viscosity may be achieved by one or more additives. The separation matrix may be provided of sufficiently low enough viscosity to be pumpable easily into and out of capillary tubes for electrophoresis. A low viscosity may allow for a high throughput of samples and a reusability of the capillary tubes for numerous separations.

In an embodiment, one of the polydimethylacrylamide and the derivatized cellulose product may be dissolved in a liquid solution, and the other one of the polydimethylacrylamide and the derivatized cellulose product may be added in powder form to the liquid solution. For instance, PDMA may be dissolved in an aqueous solution and HEC may be added in powder form to the aqueous PDMA solution. Alternatively, HEC may be dissolved in an aqueous solution and PDMA may be added in powder form to the aqueous HEC solution.

In the following, further embodiments of the separation apparatus will be explained. However, these embodiments also apply to the separation medium and to the method.

The separation medium may have integrated channels in a chip-like configuration with a substrate in which the channels are formed and which channels may be filled with the above-described separation medium. Particularly in narrow channels of a capillary electrophoresis device, the above-described separation medium may be particularly advantageous, since the charged PDMA cooperating with the cellulose derivative may fill the channels without negative impacts resulting from electroosmotic flow.

For this purpose, it is possible to use a substrate which is made of glass, a plastic material, a metal material and/or a ceramics material. Such materials are both mechanically stable and chemically sufficiently inert to receive the separation medium and to separate a fluidic sample into different fractions by applying an electric field along such a channel.

In this substrate, one or more fluidic reservoirs may be formed in addition to the channel(s) and may be filled with fluidic components which are then to be conducted in accordance with a specific operation sequence in one or more of the fluid conduits.

For allowing to apply an electric field along the at least one fluid conduit, one or more electrodes may be provided and may be dipped into the separation medium so as to apply an electric field for separating different components of a sample according to their charge/mass ratio.

The gel electrophoresis device may be adapted for separation using an applied electric field. Such an electric field may be applied to the apparatus using electrically contacted portions, particularly end portions, of a gel strip which may be electrically conducting.

### BRIEF DESCRIPTION OF DRAWINGS

Other objects and many of the attendant advantages of embodiments of the present invention will be readily appreciated and become better understood by reference to the following more detailed description of embodiments in connection with the accompanied drawings. Features that are substantially or functionally equal or similar will be referred to by the same reference signs.
Fig. 1 shows a gel electrophoresis chip which can be filled with a separation medium according to an exemplary embodiment.
Fig. 2 shows an enlarged view of a well of an electrophoresis chip of a gel electrophoresis device according to an exemplary embodiment.

The illustration in the drawing is schematically.

In the following, a detailed method of preparing a separation medium according to an exemplary embodiment will be explained.

In such an embodiment. a PDMA/Urea solution is prepared by weighting the required amounts of the PDMA stock solution and urea, adding approximately 40% of the final volume water and stirring at room temperature for 1 hour till the urea is solved completely. Then the volume is adjusted to the target. After that the desired amount of alkyl cellulose is added and stirred thoroughly overnight. To remove any charged impurities a mixed bead ion exchange resin is added to the mixture in an amount of 0.1 g per 10 ml of solution. The solution is stirred for 1 hour and then filtrated. Subsequently, the electrophoresis buffer, e.g TBE or TAPS is added and the solution is again stirred for 1 hour.

PDMA is used having polymer molecules with less than 500 kDa, for instance with 100 kDa. This is combined with HEC having polymer molecules with less than 100 kDa, for instance with 70 kDa. Then, an aqueous PDMA may be prepared to which powderous HEC may be simply added.

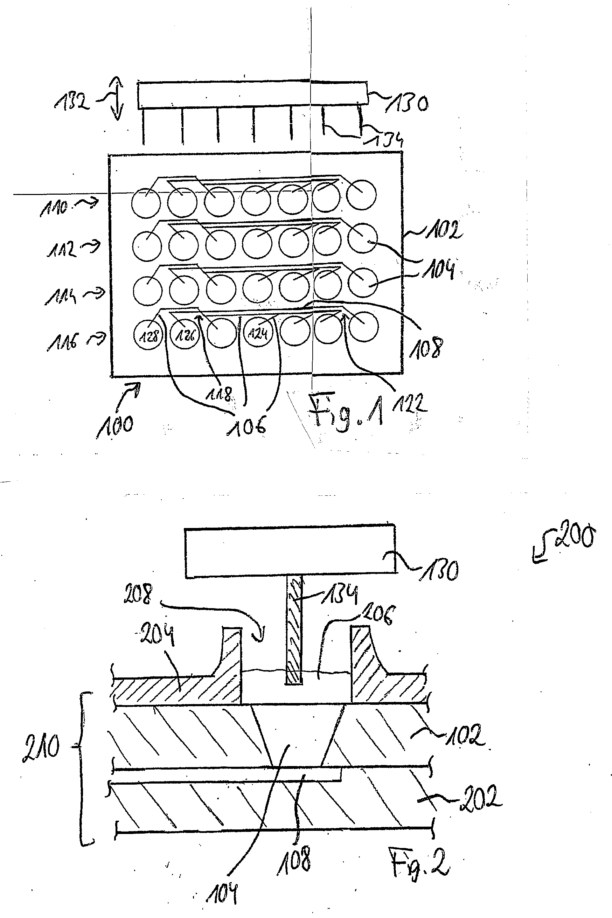

**Fig. 1** shows a biochip 100 for handling a fluidic sample such as a DNA comprising biological sample (not shown) using a separation medium according to an exemplary embodiment.

The biochip 100 comprises a glass substrate 102 in which a plurality of wells 104 are arranged in a matrix-like manner. In the embodiment of Fig. 1, the matrix of wells 104 comprises four rows and seven columns. The wells 104 are formed as cavities in the glass substrate 102. Each of the wells 104 is adapted for receiving a fluidic sample or a solvent. Groups of wells 104 are in fluid communication with one another using separation channels 106, wherein the separation channels 106 are etched in the surface of the substrate 102.

A separation medium according to an exemplary embodiment being an aqueous solution of negatively charged PDMA and HEC with urea and pyrrolidinone is filled in the fluid separation channels 106.

In the embodiment of Fig. 1, wells 104 are grouped into four groups 110, 112, 114, 116 which are in fluid communication to one another and which are however separately operable so that only the wells 104 of a respective group 110, 112, 114, 116 is capable of performing a common analysis. As further shown in Fig. 1, all wells 104 assigned to a respective group 110, 112, 114, 116 are aligned along a common direction, namely the horizontal direction in Fig. 1.

The channel 106 having the largest length of a respective group 110, 112, 114, 116 is a so-called separation channel 108. Along the separation channel 108, a separating of components of a microfluidic sample filled in one of the wells 104 can be performed. The separation channel 108 is aligned in a basically horizontal direction according to Fig. 1 and connect a majority of the wells 104 of a respective group 110, 112, 114, 116. By allowing that the separation channel 108 extends basically along the entire extension of all wells 104 of a respective group 110, 112, 114, 116 in fluid communication with one another, a sufficiently long separation path is provided.

As can be further taken from Fig. 1, a so-called injection cross 118 is provided in each of the groups 110, 112, 114, 116 for guiding fluidic samples through the wells 104 and channels 106 according to a predefined sequence.

In a detection area 122, a fluidic sample, after having passed the channels 106 according to a predefined sequence, can be separated fraction-wise and can be detected using an optical detection method.

For instance, it is possible that for separating a sample such a sample is first guided from a well 124 into a well 126 and then into a well 128 before the sample can be separated starting from well 128 along the separation channel 108 using an electrophoretic force, in order to be detected in the detection area 122.

In order to generate an electrophoretic force to the sample which migrates according to Fig. 1 along the separation channel from the left-hand side to the righthand side, one of the groups 110, 112, 114, 116 of wells 104 is first selected for an experiment. Then, an electrode arrangement 130 of an electrophoretic measurement device (for instance similar to a Bioanalyzer of the applicant Agilent Technologies) is moved in such a manner (see reference numeral 132) that the respective electrode pins are above the wells 104 of the selected group 110, 112, 114, 116. Then, the electrode arrangement 130 is lowered in order to immerse into the liquids included in the wells 104. By applying an electric signal to the electrodes 134, an electric separation field may be applied along the separation channel 108.

**Fig. 2** shows an enlarged view of a chip 210 of a measurement device 200 according to an exemplary embodiment.

In the arrangement of Fig. 2, a first glass substrate 102 is provided in which the wells 104 are formed as through-holes. These are connected to one another by an electrophoretic separation channel 108 which is however formed in a second glass substrate 202 which is bonded to the first glass substrate 102. A plastic caddy 204 can be attached onto this arrangement. Then, a fluidic sample 206 can be injected into the well 104 in a direction as indicated with an arrow 208 using a pipette (not shown).

By filling a separation medium comprising electrically charged PDMA in combination with HEC in addition to urea and pyrrolidinium in electrophoretic separation channel 108, it is possible to obtain both proper separation performance and stability of the separation medium. Furthermore, a separate coating of walls of the fluidic channels 108 is dispensable, therefore allowing for a cheap configuration.

It should be noted that the term "comprising" does not exclude other elements or steps and the "a" or "an" does not exclude a plurality. Also elements described in association with different embodiments may be combined. It should also be noted that reference signs in the claims shall not be construed as limiting the scope of the claims.

## Claims

1. A separation medium for separating different components of a fluidic sample, the separation medium comprising
polydimethylacrylamide having a molecular weight of less than 500 kDa; and
a derivatized cellulose product having a molecular weight of less than 100 kDa.

2. The separation medium of claim 1, comprising at least one of:
the polydimethylacrylamide is electrically charged;
the polydimethylacrylamide has attached a polar group providing an electric net charge;
the polydimethylacrylamide is negatively charged;
the polydimethylacrylamide comprises a negatively charged side chain, particularly a negatively charged side chain which comprises acrylic acid, for providing the electric charge;
the polydimethylacrylamide is electrically neutral.

3. The separation medium of claim 1, comprising at least one of:
the derivatized cellulose product comprises at least one of the group consisting of hydroxyalkyl cellulose, hydroxymethyl cellulose, hydroxyethyl cellulose, and hydroxypropyl cellulose;
a solvent in which the polydimethylacrylamide and the derivatized cellulose product are dissolved;
the polydimethylacrylamide has a concentration in a range between 1 weight percent and 10 weight percent, particularly in a range between 2 weight percent and 5 weight percent;
the derivatized cellulose product has a concentration in a range between 1 weight percent and 16 weight percent, particularly in a range between 2 weight percent and 8 weight percent.

4. The separation medium of claim 1, or any one of the above claims
further comprising carbamide.

5. The separation medium of the preceding claim,
wherein the carbamide has a concentration in a range between 2 M and 10 M, particularly has a concentration in a range between 5 M and 8 M.

6. The separation medium of claim 1, or any one of the above claims
further comprising pyrrolidinone.

7. The separation medium of the preceding claim,
wherein the pyrrolidinone has a concentration in a range between 2 weight percent and 30 weight percent.

8. The separation medium of claim 1, comprising at least one of the following:
the separation medium is adapted for separating different components of a fluidic sample by gel electrophoresis;
the separation medium is adapted for separating different components of a fluidic sample by capillary electrophoresis;
the separation medium is adapted as a matrix for separating single-stranded deoxyribonucleic acid by gel electrophoresis.

9. A separation apparatus for separating different components of a fluidic sample, the separation apparatus comprising a substrate;
at least one fluid conduit formed in and/or on the substrate and adapted for conducting the fluidic sample;
a separation medium of claim 1 provided in at least a part of the at least one fluid conduit.

10. The separation apparatus of the preceding claim, comprising at least one of:
the separation apparatus is adapted as a gel electrophoresis apparatus;
the separation apparatus is adapted as a capillary electrophoresis apparatus;
the substrate comprises one of the group consisting of a glass substrate, a plastics substrate, a metal substrate, and a ceramics substrate;
the substrate comprises at least one fluidic reservoir in fluid communication with at least a part of the at least one fluid conduit;
the separation apparatus comprises at least one electrode adapted for applying an electric field along the at least one fluid conduit;
the separation apparatus is adapted for separating the fluidic sample by an applied electric field.

11. The separation medium of any one of claims 1-8, wherein the separation medium is obtained by mixing the polydimethylacrylamide having a molecular weight of less than 500 kDa and the derivatized cellulose product having a molecular weight of less than 100 kDa.

12. A method of manufacturing a separation medium for separating different components of a fluidic sample, the method comprising
mixing polydimethylacrylamide having a molecular weight of less than 500 kDa and a derivatized cellulose product having a molecular weight of less than 100 kDa.

13. The method of the preceding claim, comprising at least one of:
dissolving the polydimethylacrylamide in a liquid, particularly in an aqueous solution;
dissolving the polydimethylacrylamide in a liquid, particularly in an aqueous solution, and adding the derivatized cellulose product in powder form to the dissolved polydimethylacrylamide.

14. The method of claim 12 or 13, comprising at least one of:
purifying the derivatized cellulose product;
purifying the derivatized cellulose product, wherein the derivatized cellulose product is purified by adding an ion exchanger for removing ionic impurities from the derivatized cellulose product.

15. The method of any one of the claims 12-14, comprising at least one of:
treating the separation medium for reducing viscosity of the separation medium;
one of the polydimethylacrylamide and the derivatized cellulose product is dissolved in a liquid solution, and the other one of the polydimethylacrylamide and the derivatized cellulose product is added in powder form to the liquid solution.

16. The method of any one of claims 12-15, wherein polydimethylacrylamide having a concentration in the range between 1 weight percent and 10 weight percent, particularly between 2 weight percent and 5 weight percent, is mixed with a derivatized cellulose product having a concentration in the range between 1 weight percent and 16 weight percent, particularly between 2 weight percent and 8 weight percent.

## Patentansprüche

1. Trennmedium zum Trennen von unterschiedlichen Komponenten einer fluidischen Probe, wobei das Trennmedium Polydimethylacrylamid mit einem Molekulargewicht von weniger als 500 kDa; und ein derivatisiertes Celluloseprodukt mit einem Molekulargewicht von weniger als 100 kDa umfasst.

2. Trennmedium nach Anspruch 1, umfassend wenigstens eines der folgenden:
das Polydimethylacrylamid ist elektrisch geladen;
an das Polydimethylacrylamid ist eine polare Gruppe gebunden, die eine elektrische Nettoladung bereitstellt;
das Polydimethylacrylamid ist negativ geladen;
das Polydimethylacrylamid umfasst eine negativ geladene Seitenkette, insbesondere eine negativ geladene Seitenkette, welche Acrylsäure umfasst, zum Bereitstellen der elektrischen Ladung;
das Polydimethylacrylamid ist elektrisch neutral.

3. Trennmedium nach Anspruch 1, umfassend wenigstens eines der folgenden:
das derivatisierte Celluloseprodukt umfasst wenigstens eines von der Gruppe bestehend aus Hydroxyalkylcellulose, Hydroxymethylcellulose, Hydroxyethylcellulose und Hydroxypropylcellulose;
ein Lösungsmittel, in welchem das Polydimethylacrylamid und das derivatisierte Celluloseprodukt gelöst sind;
das Polydimethylacrylamid weist eine Konzentration in einem Bereich zwischen 1 Gew.-% und 10 Gew.-%, insbesondere in einem Bereich zwischen 2 Gew.-% und 5 Gew.-% auf;
das derivatisierte Celluloseprodukt weist eine Konzentration in einem Bereich zwischen 1 Gew.-% und 16 Gew.-%, insbesondere in einem Bereich zwischen 2 Gew.-% und 8 Gew.-% auf.

4. Trennmedium nach Anspruch 1 oder einem der vorstehenden Ansprüche, das außerdem Carbamid umfasst.

5. Trennmedium nach dem vorangehenden Anspruch, wobei das Carbamid eine Konzentration in einem Bereich zwischen 2 M und 10 M aufweist, insbesondere eine Konzentration in einem Bereich zwischen 5 M und 8 M aufweist.

6. Trennmedium nach Anspruch 1 oder einem der vorstehenden Ansprüche, das außerdem Pyrrolidinon umfasst.

7. Trennmedium nach dem vorangehenden Anspruch, wobei das Pyrrolidinon eine Konzentration in einem Bereich zwischen 2 Gew.-% und 30 Gew.-% aufweist.

8. Trennmedium nach Anspruch 1, umfassend wenigstens eines der folgenden:
das Trennmedium ist für das Trennen von unterschiedlichen Komponenten einer fluidischen Probe durch Gelelektrophorese geeignet;
das Trennmedium ist zum Trennen von unterschiedlichen Komponenten einer fluidischen Probe durch Kapillarelektrophorese geeignet;
das Trennmedium ist als eine Matrix zum Trennen von einzelsträngiger Desoxyribonukleinsäure durch Gelelektrophorese geeignet.

9. Trennvorrichtung zum Trennen von unterschiedlichen Komponenten einer fluidischen Probe, wobei die Trennvorrichtung ein Substrat;
wenigstens eine Fluidleitung, die in und/oder auf dem Substrat gebildet ist und zum Leiten der fluidischen Probe geeignet ist;
ein Trennmedium nach Anspruch 1, das in wenigstens einem Teil der wenigstens einen Fluidleitung bereitgestellt ist, umfasst.

10. Trennvorrichtung nach dem vorangehenden Anspruch, umfassend wenigstens eines der folgenden:
die Trennvorrichtung ist als eine Gelelektrophoresevorrichtung geeignet;
die Trennvorrichtung ist als eine Kapillarelektrophoresevorrichtung geeignet;
das Substrat umfasst eines aus der Gruppe bestehend aus einem Glassubstrat, einem Kunststoffsubstrat, einem Metallsubstrat und einem Keramiksubstrat;
das Substrat umfasst wenigstens ein fluidisches Reservoir in Fluidverbindung mit wenigstens einem Teil der wenigstens einen Fluidleitung;
die Trennvorrichtung umfasst wenigstens eine Elektrode, die zum Anlegen eines elektrischen Felds entlang der wenigstens einen Fluidleitung geeignet ist;
die Trennvorrichtung ist zum Trennen der fluidischen Probe durch ein angelegtes elektrisches Feld geeignet.

11. Trennmedium nach einem der Ansprüche 1-8, wobei das Trennmedium durch Mischen des Polydimethylacrylamids mit einem Molekulargewicht von weniger als 500 kDa und des derivatisierten Celluloseprodukts mit einem Molekulargewicht von weniger als 100 kDa erhalten wird.

12. Verfahren zum Herstellen eines Trennmediums zum Trennen von unterschiedlichen Komponenten einer fluidischen Probe, wobei das Verfahren das Mischen von Polydimethylacrylamid mit einem Molekulargewicht von weniger als 500 kDa und einem derivatisierten Celluloseprodukt mit einem Molekulargewicht von weniger als 100 kDa umfasst.

13. Verfahren nach dem vorangehenden Anspruch, umfassend wenigstens eines der folgenden:
Lösen des Polydimethylacrylamids in einer Flüssigkeit, insbesondere in einer wässrigen Lösung;
Lösen des Polydimethylacrylamids in einer Flüssigkeit, insbesondere in einer wässrigen Lösung, und Zugeben des derivatisierten Celluloseprodukts in Pulverform zu dem gelösten Polydimethylacrylamid.

14. Verfahren nach Anspruch 12 oder 13, umfassend wenigstens eines der folgenden:
Reinigen des derivatisierten Celluloseprodukts;
Reinigen des derivatisierten Celluloseprodukts, wobei das derivatisierte Celluloseprodukt durch Zugeben eines Ionenaustauschers zum Entfernen von ionischen Verunreinigungen aus dem derivatisierten Celluloseprodukt gereinigt wird.

15. Verfahren nach einem der Ansprüche 12-14, umfassend wenigstens eines der folgenden:
Behandeln des Trennmediums zum Verringern der Viskosität des Trennmediums;
eines von dem Polydimethylacrylamid und dem derivatisierten Celluloseprodukt wird in einer flüssigen Lösung gelöst und das andere von dem Polydimethylacrylamid und dem derivatisierten Celluloseproduktwird in Pulverform zu der flüssigen Lösung zugegeben.

16. Verfahren nach einem der Ansprüche 12-15, wobei Polydimethylacrylamid mit einer Konzentration im Bereich zwischen 1 Gew.-% und 10 Gew.-%, insbesondere zwischen 2 Gew.-% und 5 Gew.-%, mit einem derivatisierten Celluloseprodukt mit einer Konzentration im Bereich zwischen 1 Gew.-% und 16 Gew.-%, insbesondere zwischen 2 Gew.-% und 8 Gew.-% vermischt wird.

## Revendications

1. Milieu de séparation pour séparer différents composants d'un échantillon fluidique, le milieu de séparation comprenant du polydiméthylacrylamide ayant un poids moléculaire inférieur à 500 kDa ; et un produit de cellulose dérivée ayant un poids moléculaire inférieur à 100 kDa.

2. Milieu de séparation selon la revendication 1, comprenant au moins une caractéristique parmi :
le polydiméthylacrylamide est chargé électriquement ;
le polydiméthylacrylamide a attaché un groupe polaire fournissant une charge nette électrique ;
le polydiméthylacrylamide est chargé négativement ;
le polydiméthylacrylamide comprend une chaîne latérale chargée négativement, en particulier une chaîne latérale chargée négativement qui comprend de l'acide acrylique, pour fournir la charge électrique ;
le polydiméthylacrylamide est électriquement neutre.

3. Milieu de séparation selon la revendication 1, comprenant au moins une caractéristique parmi :
le produit de cellulose dérivée comprend au moins l'une parmi le groupe constitué d'hydroxyalkylcellulose, hydroxyméthylcellulose, hydroxyéthylcellulose, et hydroxypropylcellulose ;
un solvant dans lequel le polydiméthylacrylamide et le produit de cellulose dérivée sont dissous ;
le polydiméthylacrylamide a une concentration dans une plage comprise entre 1 % en poids et 10 % en poids, en particulier dans une plage comprise entre 2 % en poids et 5 % en poids ;
le produit de cellulose dérivée a une concentration dans une plage comprise entre 1 % en poids et 16 % en poids, en particulier dans une plage comprise entre 2 % en poids et 8 % en poids.

4. Milieu de séparation selon la revendication 1, ou l'une quelconque des revendications précédentes, comprenant en outre du carbamide.

5. Milieu de séparation selon la revendication précédente,
dans lequel le carbamide a une concentration dans une plage comprise entre 2 M et 10 M, en particulier a une concentration dans une plage comprise entre 5 M et 8 M.

6. Milieu de séparation selon la revendication 1, ou l'une quelconque des revendications précédentes, comprenant en outre de la pyrrolidinone.

7. Milieu de séparation selon la revendication précédente,
dans lequel la pyrrolidinone a une concentration dans une plage comprise entre 2 % en poids à 30 % en poids.

8. Milieu de séparation selon la revendication 1, comprenant au moins l'une des caractéristiques suivantes :
le milieu de séparation est adapté pour séparer différents composants d'un échantillon fluidique par électrophorèse sur gel ;
le milieu de séparation est adapté pour séparer différents composants d'un échantillon fluidique par électrophorèse capillaire ;
le milieu de séparation est adapté en tant que matrice pour séparer de l'acide désoxyribonucléique simple brin par électrophorèse sur gel.

9. Appareil de séparation pour séparer différents composants d'un échantillon fluidique, l'appareil de séparation comprenant un substrat ;
au moins un conduit de fluide formé dans et/ou sur le substrat et adapté pour conduire l'échantillon fluidique ;
un milieu de séparation selon la revendication 1 agencé dans au moins une partie du au moins un conduit de fluide.

10. Appareil de séparation selon la revendication précédente, comprenant au moins l'une des caractéristiques suivantes :
l'appareil de séparation est adapté en tant qu'appareil d'électrophorèse sur gel ;
l'appareil de séparation est adapté en tant qu'appareil d'électrophorèse capillaire ;
le substrat comprend l'un parmi un groupe constitué d'un substrat de verre, d'un substrat de matière plastique, d'un substrat de métal, et d'un substrat de céramique ;
le substrat comprend au moins un réservoir de fluide en communication fluidique avec au moins une partie du au moins un conduit de fluide ;
l'appareil de séparation comprend au moins une électrode adaptée pour appliquer un champ électrique le long du au moins un conduit de fluide ;
l'appareil de séparation est adapté pour séparer l'échantillon fluidique par un champ électrique appliqué.

11. Milieu de séparation selon l'une quelconque des revendications 1 à 8, dans lequel le milieu de séparation est obtenu en mélangeant le polydiméthylacrylamide ayant un poids moléculaire inférieur à 500 kDa et le produit de cellulose dérivée ayant un poids moléculaire inférieur à 100 kDa.

12. Procédé de fabrication d'un milieu de séparation pour séparer différents composants d'un échantillon fluidique, le procédé comprenant de mélanger du polydiméthylacrylamide ayant un poids moléculaire inférieur à 500 kDa et un produit de cellulose dérivée ayant un poids moléculaire inférieur à 100 kDa.

13. Procédé selon la revendication précédente, comprenant au moins une des étapes consistant à :
dissoudre le polydiméthylacrylamide dans un liquide, en particulier dans une solution aqueuse ;
dissoudre le polydiméthylacrylamide dans un liquide, en particulier dans une solution aqueuse, et ajouter le produit de cellulose dérivée sous forme de poudre au polydiméthylacrylamide dissous.

14. Procédé selon la revendication 12 ou 13, comprenant au moins une des étapes consistant à :
purifier le produit de cellulose dérivée ;
purifier le produit de cellulose dérivée, dans lequel le produit de cellulose dérivée est purifié en ajoutant un échangeur d'ions pour éliminer des impuretés ioniques du produit de cellulose dérivée.

15. Procédé selon l'une quelconque des revendications 12 à 14, comprenant au moins une des étapes consistant à :
traiter le milieu de séparation pour réduire la viscosité du milieu de séparation ;
l'un parmi le polydiméthylacrylamide et le produit de cellulose dérivée est dissous dans une solution liquide, et l'autre parmi le polydiméthylacrylamide et le produit de cellulose dérivée est ajouté sous forme de poudre à la solution liquide.

16. Procédé selon l'une quelconque des revendications 12 à 15, dans lequel le polydiméthylacrylamide ayant une concentration dans la plage comprise entre 1 % en poids et 10 % en poids, en particulier entre 2 % en poids et 5 % en poids, est mélangé avec un produit de cellulose dérivée ayant une concentration dans la plage comprise entre 1 % en poids et 16 % en poids, en particulier entre 2 % en poids et 8 % en poids.
